(19) Europäisches Patentamt
European Patent Office
Office européen des brevets

(11) Veröffentlichungsnummer: **0 036 535 B1**

# (12) EUROPÄISCHE PATENTSCHRIFT

(45) Veröffentlichungstag der Patentschrift:
18.07.84

(21) Anmeldenummer: 81101662.5

(22) Anmeldetag: 06.03.81

(51) Int. Cl.³: **F 16 L 55/16**, F 16 L 37/24, F 16 L 21/06

(54) Reparaturkupplung.

(30) Priorität: 25.03.80 DE 3011470
26.11.80 DE 3044513

(43) Veröffentlichungstag der Anmeldung:
30.09.81 Patentblatt 81/39

(45) Bekanntmachung des Hinweises auf die Patenterteilung:
18.07.84 Patentblatt 84/29

(84) Benannte Vertragsstaaten:
BE CH FR GB IT LI NL SE

(56) Entgegenhaltungen:
CH - A - 548 564
DE - A - 2 624 521
DE - A - 2 819 921
US - A - 3 589 750
US - A - 3 840 053
US - A - 3 854 757

(73) Patentinhaber: WOCO Franz-Josef Wolf & Co.,
Sprudelallee 19, D-6483 Bad Soden-Salmünster (DE)

(72) Erfinder: **Wolf, Franz Josef**, Sprudelallee 19, D-6483 Bad Soden-Salmünster (DE)
Erfinder: **Lauer, Hansjörg**, Dipl.-Ing., Marburger Strasse 5, D-6483 Bad Soden-Salmünster (DE)

(74) Vertreter: Jaeger, Klaus, Dr.rer.nat. Dipl.-Chem. et al, Jaeger, Grams & Pontani Patentanwälte Bergstrasse 48 1/2, D-8035 München-Gauting (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Reparaturkupplung der im Oberbegriff des Patentanspruchs 1 genannten Art.

Die Reparatur fest verlegter Rohrleitungen bereitet vor allem dann technische Schwierigkeiten, wenn die Rohrleitungen nicht geschweißt oder gelötet werden können. Dies kann beispielsweise dann der Fall sein, wenn der Werkstoff, aus dem die Rohre der Leitungen bestehen, nicht schweißbar und nicht lötbar ist, beispielsweise aus einem mineralischen Werkstoff bestehen, oder wenn aus anderen Gründen, beispielsweise aus sicherheitstechnischen Gründen, nicht geschweißt oder gelötet werden darf. Die Reparatur wird insbesondere dann problematisch, wenn ein Rohrabschnitt insgesamt ausgetauscht werden soll. Das Problem liegt darin, daß der in die fest verlegte Rohrleitung einzufügende Rohrabschnitt, beispielsweise ein neu einzufügendes Abzweigstück, möglichst genau in der Weise abzulängen ist, daß es gerade zwischen die beiden freigelegten Enden der fest verlegten Rohrleitung mit möglichst geringem axialen Spiel einfügbar ist. Unter diesen Voraussetzungen sind die sonst bei der Erstverlegung von Rohrleitungen so vorteilhaft einsetzbaren ringgedichteten Muffenverbindungen nicht verwendbar, bei denen ein axiales Einschieben des Spitzendes in die Muffe erforderlich ist.

Zur Herstellung einer dichten Verbindung zwischen zwei axial fluchtend und praktisch ohne Spiel einander gegenüberliegenden Spitzenden ist aus der US-A-3 589 750 eine gattungsgemäße Reparaturkupplung bekannt. Bei dieser bekannten Reparaturkupplung werden die beiden Hülsenteile trennebenenseitig durch mehrere Schraubverbindungen miteinander und gegeneinander befestigt. Zur Abdichtung in der Trennebene wird dabei üblicherweise eine O-Ring-Dichtung verwendet, die durch die Schraubverbindung gegen die Stirnseiten der Hülsenteile als Verpressungsdichtung zu liegen kommt. Nachteilig bei dieser bekannten Reparaturkupplung ist, daß die Befestigung der einzelnen Hülsenteile miteinander durch die Verschraubung relativ zeitaufwendig ist. Hierbei tritt zusätzlich das Problem der genauen Anordnung der O-Ring-Dichtung während des eigentlichen Verschraubens auf, bis die Stirnseiten der Hülsenteile in Verpressungskontakt mit dieser Dichtung gelangen. Die Dichtung der beiden Hülsenteile gegeneinander in der Trennebene besteht daher aus einer Verpressungsdichtung mit all den bei diesen Dichtungen bekannten Nachteilen, wobei im speziellen Fall noch hinzutritt, daß durch unterschiedlich starkes Anziehen der Schraubverbindungen eine ungleichmäßige Dichtwirkung in der Trennebene auftreten kann.

Ausgehend von diesem Stand der Technik liegt der Erfindung die Aufgabe zugrunde, eine gattungsgemäße Reparaturkupplung so auszubilden, daß diese auch bei hohen Innendrücken und Außendrücken zuverlässig abdichtet und die auch montagemäßig einfach zu handhaben ist.

Diese Aufgabe wird bei einer gattungsgemäßen Reparaturkupplung gemäß dem Oberbegriff des Patentanspruches 1 durch die Merkmale des kennzeichnenden Teils des Anspruches 1 gelöst.

Die komplementäre Ausbildung der Hülsenteile mit einem Bajonettverschluß erlaubt es, im Prinzip ohne weitere Hilfsmittel, die Befestigung der Reparaturkupplung durchzuführen. Beim Einrasten des Bajonettverschlusses ist dabei zusätzlich sichergestellt, daß über den vollen Umfang der Stirnseiten der Hülsenteile in der Trennebene eine gleichmäßige Dichtungskraft auf die dazwischen angeordnete Dichtung ausgeübt wird.

Die Dichtheit der beiden Hülsenteile gegeneinander in der Trennebene wird nach der Erfindung dadurch sichergestellt, daß in den beiden einander in der Trennebene konzentrisch und sich axial gegeneinander öffnend angeordneten Ringnuten nicht ein gemeinsamer Dichtungsring angeordnet ist, der als Preßdichtung wirkt und mit jeweils der Hälfte seines Schnurquerschnitts in je einer der beiden Ringnuten liegt, sondern daß die Ringnuten in der Trennebene, die mit rechteckigem oder quadratischem Querschnitt ausgebildet sein können, jeweils einen eigenen gummielastischen Dichtungsring aufnehmen.

Dieser Dichtungsring ist ein Lippenring. Jeder dieser Lippenringe dichtet einerseits gegen den Boden der Ringnut, in dem er jeweils liegt, und dichtet andererseits in der Trennebene gegen den konzentrisch gegenüberliegenden Ring der jeweils anderen Hülsenhälfte. Der in jeder der Ringnuten liegende Dichtungsring ist mit einem Paar V-förmig gegeneinanderstehender Lippen versehen, deren eingeschlossener Profilwinkel sich nach radial innen, bezogen auf die Hülsenteile bzw. die zusammengesetzte Reparaturkupplung, öffnen. Dabei dichtet jeweils eine der Dichtlippen jedes Ringes gegen den Boden der Nut, während die beiden jeweils anderen Lippen zusammenwirkend gegeneinander dichtend aneinander anliegen. Insgesamt wird dadurch in der Trennebene eine wesentlich größere Dichtheit erreicht, als beim Einlegen eines beide Ringnuten gemeinsam ausfüllenden, durch Verpressen dichtenden Dichtungsringes, insbesondere eines O-Ringes, erzielt werden kann.

Die Anordnung von zwei Lippendichtungsringen in der radialen Trennebene bringt gerade beim Ineinanderdrehen des Bajonettverschlusses den Vorteil mit sich, daß die Dichtungsringe gegeneinander sowohl längs des Kreisumfanges als auch in gewisser radialer Versetzung sich verschieben können, ohne daß dadurch die Dichtwirkung beeinträchtigt wird.

Nach einer Ausgestaltung der Erfindung ist der Bajonettverschluß vorzugsweise als Sperrverschluß ausgebildet. Unter einem Bajonett-Sperrverschluß wird dabei in diesem Zusammenhang ein Bajonettverschluß verstanden, der Sperrelemente oder Blockierungselemente aufweist, die verhindern, daß die beiden durch die Verriegelungselemente des Bajonettverschlusses zusammengefügten Hülsenteile in Öffnungsrichtung gegeneinander verdrehbar sind und damit ein unbeabsichtigtes Wiederöffnen der Hülsenteile verhindert ist.

In einfachster Weise kann ein solches Blockierungselement als Verstärkung an einem der Verriegelungselemente des Bajonettverschlusses ausgebildet sein, wobei beim Verschließen des Bajonettverschlusses und Verdrehen der Hülsenteile in Verriegelungsrichtung das komplementäre Verriegelungselement des Bajonettverschlusses hinter das dann sperrend wirkende Blockierungselement verdreht wird.

Nach einer weiteren Ausgestaltung der Erfindung sind in den in der Trennebene der Reparaturkupplung einander gegenüberliegenden Stirnseiten der Hülsenteile außenseitig Verstärkungen für den Angriff eines Spannwerkzeugs vorgesehen, mit dem die Hülsenteile axial aufeinanderzu gezogen und verriegelnd gegeneinander verdreht werden können. Ein solches Spannwerkzeug kann im einfachsten Fall beispielsweise eine Rohrzange oder eine mit Eingriffsstiften versehene Gelenkzange sein. Je nach Art des verwendeten Spannwerkzeugs sind die Verstärkungen auf den Hülsenaußenseiten auszubilden, beispielsweise also als vorspringende Stege auszubilden, an die eine Rohrzange angesetzt werden kann, oder mit zylindrischen Bohrungen zu versehen, in die die Zapfen einer entsprechenden Spannzange einsetzbar sind.

Als Hülsenwerkstoffe für die Reparaturkupplung können verstärkte und unverstärkte Kunststoffe aller Art, verstärkte und unverstärkte, hart eingestellte Elastomere, metallische Werkstoffe oder Kombinationen dieser Werkstoffe miteinander verwendet werden. Die Dichtungselemente für die Spitzenden sind vorzugsweise Dichtungsringe, die auch zu mehreren auf jeder Stirnseite axial hintereinanderliegend angeordnet sein können. Die Dichtungsringe bestehen in gebräuchlicher Weise aus einem elastischen Werkstoff und können als Lippendichtungsringe ausgebildet sein. Als Dichtungselemente können aber auch manschettenartige Dichtungselemente, also reine Flächendichtungen, oder auch Preßdichtungen verwendet werden. Die Dichtungselemente können einstückig mit der Hülse ausgebildet oder lösbar oder unlösbar mit der Hülse verbunden sein. Wichtig ist lediglich, daß die Dichtungselemente im Zusammenwirken mit der Hülse ein eingestecktes Spitzende den Anforderungen des Einzelfalles entsprechend in an sich bekannter Weise abzudichten vermögen.

Die radiale Trennebene zwischen den beiden Hülsenhälften kann prinzipiell an jeder beliebigen Stelle zwischen den Dichtungselementen an den beiden einander gegenüberliegenden Stirnseiten der Kupplung angeordnet sein. Vorzugsweise ist die Trennebene jedoch axial mittig in der Muffenhülse vorgesehen.

Der lichte Durchmesser der Dichtungselemente an den beiden Stirnseiten der zweiteiligen Hülse der Reparaturkupplung wird in aller Regel auf beiden Hülsenteilen gleich groß sein. Dies ist jedoch einleuchtenderweise keineswegs zwingend erforderlich. Vielmehr kann bei unterschiedlichen Durchmessern auf beiden Hülsenstirnseiten die Reparaturkupplung auch als insbeondere bedarfsweise zusammenfügbares und dimensionierbares Reduzierstück verwendet werden. Entscheidend ist lediglich, daß die beiden unterschiedlich bemessenen Hülsenhälften in der Trennebene komplementär ausgestaltet und dicht miteinander verbindbar sind.

Prinzipiell gleichgültig ist der Werkstoff, aus dem die miteinander zu verbindenden Rohre bzw. Rohrenden bestehen. So können die miteinander zu verbindenden Spitzenden beispielsweise aus Kunststoff, mineralischen Werkstoffen oder Metall bestehen. Vorzugsweise dient die Reparaturkupplung der Erfindung jedoch dem Verbinden der muffenlosen Enden zweier koaxial einander gegenüberliegender Spitzenden von Rohren aus mineralischen Werkstoffen.

Die Verwendung der Reparaturkupplung ist im folgenden kurz erläutert:

Es sei angenommen, in einer unverzweigten, fest verlegten Rohrleitung sei ein Abzweigungsstück einzusetzen. Zu diesem Zweck wird aus der unverzweigten Rohrleitung zunächst ein Abschnitt eines Rohrschusses herausgeschnitten, dessen axiale Länge praktisch der axialen Länge des einzusetzenden Abzweigstückes entspricht bzw. geringfügig größer als diese ist. Nach dem Herausnehmen des ausgeschnittenen Abschnitts des Rohrschusses wird die eine Hälfte der Reparaturkupplung mit dem mit einem Dichtungsring oder einem entsprechenden Dichtungselement versehenen Abschnitt, der Muffenöffnung, voran auf das freiliegende Spitzende der fest verlegten Rohrleitung geschoben. Gleichzeitig wird das komplementäre Teil der zweigeteilten Muffenhülse in entsprechender Weise bei eingelegtem Dichtungsring auf das Spitzende des einzusetzenden Abzweigstücks geschoben. Die beiden Muffenteile werden dabei soweit auf die beiden Spitzenden geschoben, daß die Trennebenenfläche jedes der beiden Muffenteile im wesentlichen in der Ebene der offenen Stirnseite der beiden Spitzenden liegt.

In gleicher Weise werden auf dem gegenüberliegenden Spitzende des Abzweigstücks und auf dem gegenüberliegenden freien Spitzende der fest verlegten Rohrleitung zwei zueinander komplementäre Hülsenhälften aufgeschoben. Anschließend wird das Abzweigstück mit den beiden aufgesteckten Hülsenteilen axial fluchtend zwischen die beiden ebenfalls mit Hülsenteilen bestückten freistehenden Spitzenden der fest verlegten Rohrleitung eingesetzt. Die jeweils einander zugeordnet gegenüberliegenden Hülsenhälften der Reparaturkupplung der Erfindung werden dann axial soweit aufeinander zugeschoben, bis sie in den Trennflächen fest aufeinanderliegen. Dabei wird selbst bei symmetrisch in der Hülse angeordneter Trennebene die Muffenhülse insgesamt so zusammengefügt und verschoben, daß die Trennebene nicht mit der Spaltebene zwischen den beiden Spitzenden zusammenfällt. Vielmehr liegt die Trennebene der beiden Hülsenhälften vorzugsweise auf einem der beiden Spitzenden. Trotz symmetrischer Teilung liegt die Muffenhülse insgesamt also nicht symmetrisch zur Spaltebene zwischen den beiden koaxial fluchtend einander stirnseitig gegenüberliegenden Spitzenden, sondern axial dazu verschoben. Durch diese Anordnung wird eine erhöhte mechanische Scherbelastbarkeit der Reparaturkupplung, insbesondere bei unterstützenden inneren Ringrippen, erzielt. Diese unterstützenden inneren Ringrippen in den Hülsenteilen, insbesondere im Bereich der Trennebene der Hülsenteile, fördern dadurch, daß sie Auflagerringe für die miteinander zu verbindenden Spitzenden bilden, die Scherbelastbarkeit der Reparaturkupplung.

Nach dem Zusammenfügen der Hülsenhälften in der Trennebene wird je nach Ausbildung der Dichtungs- und Verbindungsmittel die dichtende Verbindung der Hülsenteile zur zusammenhängenden Muffe vorgenommen.

Die Erfindung ist im folgenden anhand von Ausführungsbeispielen in Verbindung mit den Zeichnungen näher erläutert. Es zeigt

Fig. 1 in Seitenansicht und teilweise im Axialschnitt ein Ausführungsbeispiel der Reparaturkupplung;

Fig. 2 in Teildarstellung einen Schnitt nach II-II in Fig. 1 und

Fig. 3 in vergrößerter Teildarstellung einen Schnitt nach III-III in Fig. 2.

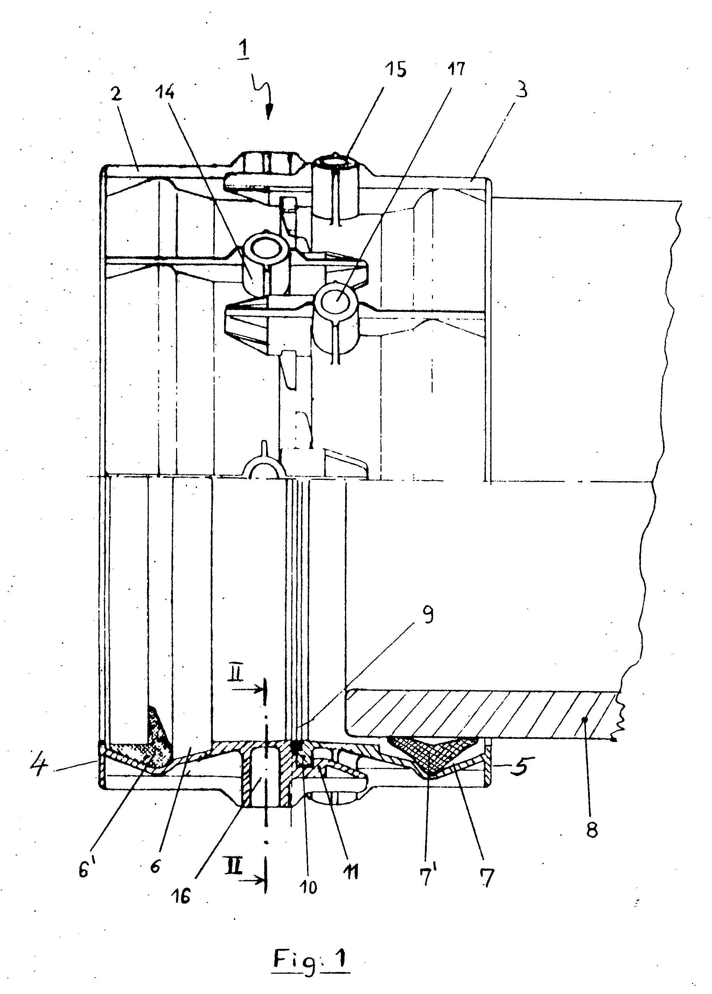

Die in der Fig. 1 im oberen Teil in Seitensicht und im unteren Teil im Axialschnitt dargestellte Reparaturkupplung 1 besteht aus zwei Hülsenteilen 2, 3. An jeder der axial äußeren Stirnseiten 4, 5 der Hülsenteile 2, 3 ist jeweils eine Ringnut 6, 7 ausgebildet, in der jeweils ein Dichtungsring 6', 7' liegt, der das entsprechende Hülsenteil gegen ein eingestecktes Spitzende 8 einer Rohrleitung dichtet. Auf der linken Seite der Fig. 1 ist im Hülsenteil 2 der Dichtungsring 6' in seiner Stellung vor dem Einschieben des Spitzendes gezeigt, während auf der rechten Seite im Hülsenteil 3 die Stellung des Dichtungsringes 7' nach dem Einschieben des Spitzendes 8 dargestellt ist. Beim Einschieben des Spitzendes 8 führt der Dichtungsring 6', 7' also eine Kippbewegung aus, die gelenkpfannenartig von einer Rundkehlung auf dem Boden der Nut 6, 7 gegen eine axiale Verschiebung abgestützt ist.

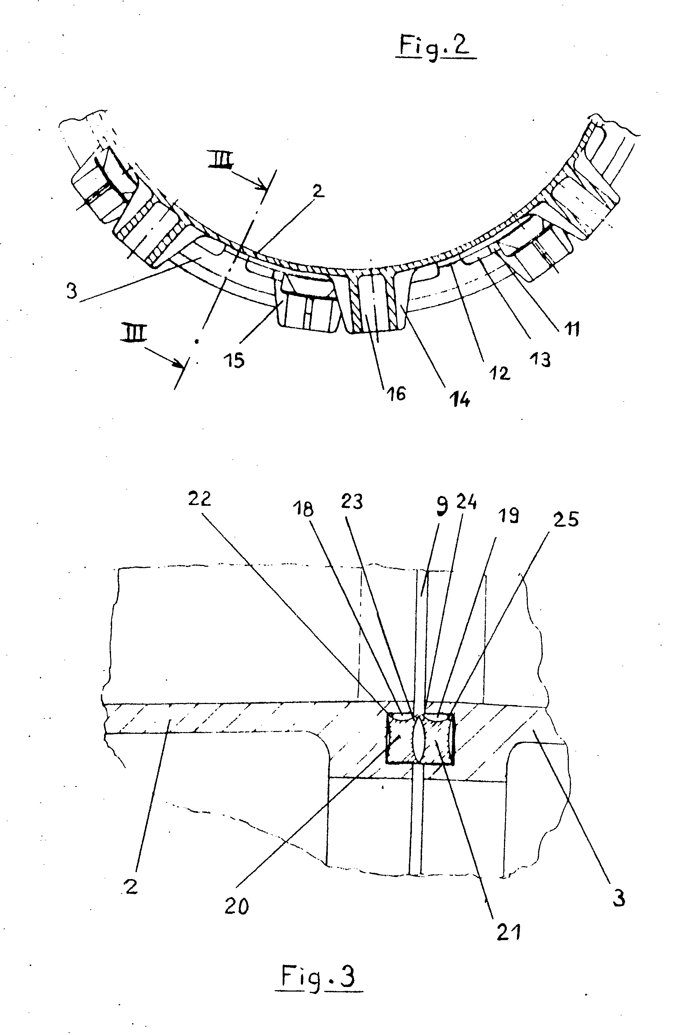

In der Trennebene 9 der Reparaturkupplung 1 sind die beiden Hülsenteile 2, 3 dicht und formschlüssig miteinander verbunden. Die Verbindung wird durch nach Art eines Außenflansches ausgebildete Zungen 10 bewirkt, die an einem der beiden Hülsenteile, hier am Hülsenteil 3, in gleichmäßigen Winkelabständen voneinander über den Außenrand der Stirnseite des Hülsenteils 3 angeordnet sind, und die einen entsprechend ausgebildeten komplementären Hinterschnitt 11 am anderen Hülsenteil, hier am Hülsenteil 2, hintergreifen. Der Hinterschnitt 11 ist in Abständen, die in ihrer Abmessung und Verteilung den Abmessungen und der Verteilung der Zungen 10 entsprechen, mit Öffnungen oder Durchbrüchen 12 (Fig. 2) versehen, durch die hindurch die Zungen 10 des Hülsenteils 3 hinter den Hinterschnittring 11 am Hülsenteil 2 geführt werden können, und zwar in der entsprechenden Winkelstellung der beiden Hülsenteile gegeneinander durch axiales Gegeneinanderpressen der Stirnseiten der Hülsenteile 2, 3 in der Trennebene. Durch anschließendes Verdrehen beider Hülsenteile 2, 3 gegeneinander erfolgt der in Fig. 1 gezeigte Verschluß beider Hülsenteile 2, 3 miteinander zur Reparaturkupplung 1. Der Hinterschnittring 11 mit den Durchbrüchen 12 und die außenflanschartigen Zungen 10 bilden also gemeinsam einen Bajonettverschluß, mit dem die beiden Hülsenteile 2, 3 formschlüssig zur Reparaturkupplung 1 verbindbar sind. Dabei ist der Hinterschnitt 11 an seinem zum Durchbruch 12 weisenden Rand mit einer Verstärkung 13 versehen, die axial in Richtung des Hinterschnitts vorspringt und als Blockierungselement wirkt, das ein Wiederherausdrehen der einmal eingedrehten Verriegelungszunge 10 aus dem Hinterschnitt 11 blockiert. Der Bajonettverschluß 10, 11, 12, 13 wirkt also als selbstverriegelnder Sperrverschluß.

An der der Trennebene 9 der beiden Hülsenteile zugewandten Stirnseite weisen beide Hülsenteile 2, 3 auf ihrer Außenseite nach radial auswärts vorspringende Verstärkungen 14, 15 auf, die dem Angriff eines Spannwerkzeugs, beispielsweise einer Rohrzange, dienen. In dem in den Figuren gezeigten Ausführungsbeispiel der Erfindung weisen diese Verstärkungen 14, 15 zusätzlich Bohrungen 16, 17 für den Angriff der Zapfen einer Spannzange auf.

In der Trennebene 9 zugekehrten Stirnseite ist jedes der beiden Hülsenteile 2, 3 mit einer Ringnut 18, 19 versehen. Die Ringnut 18, 19 weist ein rechteckiges Profil auf. Jede der Ringnuten 18, 19 öffnet sich axial. Die beiden Ringnuten 18, 19 sind beim koaxialen Zusammenfügen der Hülsenteile 2, 3 konzentrisch zueinander angeordnet. In jeder der Ringnuten 18, 19 liegt je ein eigener separater Dichtungsring 20, 21 (Fig. 3). Die beiden Dichtungsringe 20, 21 sind als Lippenringe ausgebildet und in der in Fig. 3 dargestellten Weise vorzugsweise mit gleichem Schnurprofil.

Das Schnurprofil der in Fig. 3 gezeigten Dichtungsringe 2, 3 hat im wesentlichen die Form eines Rechtecks mit konkaven Kanten. Dadurch werden an jedem Dichtungsring im wesentlichen V-förmig gegeneinanderstehende Dichtlippen 22, 23 bzw. 24, 25 gebildet, wobei sich der von den beiden Dichtlippen 22, 23 bzw. 24, 25 jeweils eingeschlossene Winkel nach radial innen (bezogen auf die Achse der Hülsen 2, 3 bzw. der Reparaturkupplung 1) öffnen. Unter Druck stehendes und durch die Trennebene 9 zwischen den beiden Hülsenteile 2, 3 hindurchgelangendes, in den Rohrleitungen gefördertes Gut, in der Regel eine Flüssigkeit, erhöht also auf Grund seines Druckes die durch dieserart ausgebildete Lippenringe bewirkte Dichtheit der beiden Hülsenteile 2, 3 gegeneinander in der Trennebene 9. Die so durch die zwei zusammenwirkenden Lippendichtungsringe unter sonst identischen Kupplungsbedingungen zwischen den beiden Hülsenteilen 2, 3 erzielbare Dichtheit der Reparaturkupplung 1 in der Trennebene 9 ist wesentlich größer, also bis zu größeren Innendrücken belastbar, und gleichzeitig wesentlich zuverlässiger bei der Montage als eine vergleichbare Dichtung, bei der lediglich ein einziger, zur Verpressung bestimmter elastischer Dichtungsring beide Ringnuten 18, 19 gemeinsam ausfüllt.

Es ist dabei ersichtlich, daß das Schnurprofil der Dichtungsringe 20, 21 auch andere Abmessungen und Konfigurationen aufweisen kann. Von ausschlaggebender Bedeutung ist lediglich, daß die Dichtungsringe als Lippendichtungsringe ausgebildet sind, von denen jeweils eine der am Ring ausgebildeten Dichtlippen 23, 24 bei zusammengefügten Hülsenteilen 2, 3 dichtend gegen die entsprechende Dichtlippe des anderen Dichtungsringes anliegt, während die an jedem der Ringe vorgesehene zweite Dichtlippe 22, 25 gegen den Boden der den jeweiligen Dichtungsring aufnehmenden Ringnut 18, 19 dichtet.

## Patentansprüche

1. Reparaturkupplung (1) zur Herstellung einer Rohrsteckverbindung zwischen zwei muffenlosen Rohrleitungsspitzenden (8), mit einer zweiteiligen Muffenhülse, deren zwei beidseitig offene Hülsenteile (2, 3) in einer radialen Trennebene (9) unter Einschluß mindestens eines Dichtungsringes (20, 21) dichtend miteinander befestigbar sind, wobei im Bereich der axial äußeren Stirnseiten (4, 5) der Hülsenteile (2, 3) Dichtungselemente (6', 7') gegenüber dem entsprechenden Spitzende (8) angeordnet sind, dadurch gekennzeichnet, daß die beiden Hülsenteile (2, 3) durch einen Bajonettverschluß (10, 11, 12) miteinander verbindbar sind, daß in der radialen Trennebene (9) in jedem der beiden Hülsenteile (2, 3) je eine Ringnut (18, 19) ausgebildet ist, die sich axial gegeneinander öffnend konzentrisch zueinander angeordnet sind, und daß in jeder dieser beiden Ringnuten (18, 19) je ein Lippendichtungsring (20, 21) liegt, von denen jeder zumindest ein Paar V-förmig gegeneinanderstehende, sich nach radial innen öffnende Dichtlippen (22, 23; 24, 25) trägt, von denen bei zusammengesetzter Reparaturkupplung (1) jeweils eine Dichtlippe (23; 25) gegen den Boden der Ringnut (18, 19) und die jeweils andere Dichtlippe (23, 24) gegen die anliegende entsprechende Dichtlippe (24, 23) des jeweils anderen Lippendichtungsringes (20, 21) dichtet.

2. Reparaturkupplung nach Anspruch 1, dadurch gekennzeichnet, daß der Bajonettverschluß (10, 11, 12) als Sperrverschluß mit mindestens einem Blockierungselement (13) an mindestens einem der beiden zusammenwirkenden Verriegelungselemente (11) des Bajonettverschlusses (10, 11, 12) ausgebildet ist, so daß der Verschluß nach dem verriegelnden Zusammendrehen der beiden Hülsenteil (2, 3) gegen eine Verdrehung in Öffnungsrichtung blockiert ist.

3. Reparaturkupplung nach einem der Ansprüche 1 oder 2, dadurch gekennzeichnet, daß an den trennebenenseitigen Stirnseiten der Hülsenteile (2, 3) außenseitig Verstärkungen (14, 15) für den Angriff eines Spannwerkzeugs zum verriegelnden Verdrehen der beiden Hülsenteile (2, 3) gegeneinander ausgebildet sind.

## Claims

1. Repair coupling (1) for providing a pipe-joint between two spigots (8) having no sockets, said coupling comprises a two-piece socket-line sleeve having two sleeve pieces (2, 3) which are open at both sides and which are sealingly fixed to each other in a radial separation area (9) while including at least one sealing ring (20, 21), in said coupling there are provided sealing elements (6', 7') in a region of the axial outer front faces (4, 5) of the sleeve pieces (2, 3) for sealing against the corresponding spigot (8), characterized in that both sleeve-pieces (2, 3) are connectable to each other by a bayonet-joint (10, 11, 12), that an annular groove (18, 19) is provided in the radial separation area (9) in each of said both sleeve-pieces (2, 3), whereby the annular grooves (18, 19) are arranged concentrically and axially open to each other, and that a lip-sealing ring (20, 21) is arranged in each of the both annular grooves (18, 19), said lip-sealing ring has a pair of sealing lips (20, 23; 24, 25) which are provided V-shaped to each other and which are open in a radial inner direction in such a way that in the assembled coupling (1) one sealing lip (23; 25) is in sealing contact against the bottom of the annular groove (18, 19) while the other sealing lip (23, 24) is in sealing contact against the adjacent corresponding sealing lip (24, 23) of the other lip-sealing ring (20, 21).

2. Repair coupling according to claim 1, wherein the locking bayonet joint (10, 11, 12) comprises at least one blocking element (13) arranged at least at one of the both cooperating locking elements (11) of the bayonet joint (10, 11, 12) in such a manner that after turning together the both sleeve pieces (2, 3) lockingly the bajonet joint is blocked against turning it in a direction for opening.

3. Repair coupling according to one of the claims 1 or 2, wherein stiffening means (14, 15) are provided externally on the front faces of the sleeve-pieces (2, 3) in the separation area for applying a clamping tool to the stiffening means (14, 15) and for turning the both sleeve-pieces (2, 3) into their locking position against each other.

## Revendications

1. Accouplement à réparation (1) pour la réalisation d'un raccordement par emboîtement de deux extrémités mâles (8) d'une canalisation et comportant un manchon en deux parties dont l'étanchéité entre deux extrémités ouvertes (2, 3) peut être réalisée, à la hauteur d'un plan de séparation radial (9), à l'aide d'un joint d'étanchéité annulaire (20, 21) au moins, de telle manière que des éléments d'étanchéité (6', 7'), placés dans la zone des parois frontales extérieures (4, 5) des deux parties (2, 3) du manchon, assurent l'étanchéité par rapport à l'extrémité mâle (8) correspondante, caractérisé en ce que les deux parties (2, 3) du manchon peuvent être reliées entre elles à l'aide d'un dispositif d'emboîtement à balonnette (10, 11, 12), en ce que deux rainures concentriques (18, 19) opposées par leur ouverture sont ménagées, à la hauteur du plan de séparation radial (9), sur l'extrémité de chacune des deux parties (2, 3) du manchon et en ce que chacune de ces rainures annulaires (18, 19) reçoit un joint d'étanchéité annulaire à lèvres (20, 21) comportent chacun au moins une paire de lèvres d'étanchéité (22, 23 et 24, 25) en form de V, s'écartant dans le sens radial et vers l'intérieur, alors qu'en position assemblée de l'accouplement à réparation (1), l'une de ces lèvres (22, 25) assure l'étanchéité par rapport au fond de la rainure annulaire (18, 19), tandis que la deuxième de ces lèvres (23, 24) s'applique contre la lèvre correspondante (24, 23) du joint d'étanchéité annulaire à lèvres (20, 21) opposé.

2. Accouplement à réparation selon la revendication 1, caractérisé en ce que le dispositif d'emboîtement à balonnette (10, 11, 12) est réalisé sur l'un au moins des deux éléments d'enclenchement coordonnés (11) de ce dispositif d'emboîtement à balonnette, en vue d'empêcher ainsi le déverrouillage dans le sens de l'ouverture des deux parties (2, 3) assemblées et verrouillées du manchon.

3. Accouplement à réparation selon l'une des revendications 1 ou 2, caractérisé en ce que, du côté du plan de séparation, les parois frontales des deux parties du manchon (2, 3) comportant des renforcements extérieurs (14, 15) facilitant, au moment de l'assemblage et du verrouillage des deux parties (2, 3) du manchon, la prise d'un outil de serrage appropié.

Fig. 1

Fig.2

Fig.3